# FASCICULE DE BREVET EUROPEEN

(11) **EP 3 257 126 B1**
(45) Date de publication et mention de la délivrance du brevet: **09.09.2020**
(21) Numéro de dépôt: 16705260.4
(22) Date de dépôt: 05.02.2016
(51) Int. Cl.: H02G 9/00

(54) **PROCÉDÉ DE RACCORDEMENT DE CÂBLES D'UNE SECTION UNITAIRE DE CONDUITE DESTINÉE À ÊTRE ASSEMBLÉE VERTICALEMENT SUR UNE CONDUITE SOUS-MARINE DE TRANSPORT DE FLUIDES**
VERFAHREN ZUR VERBINDUNG VON KABELN EINES ROHRLEITUNGSEINHEITABSCHNITTS, DER VERTIKAL AN EINE UNTERWASSERROHRLEITUNG ZUM TRANSPORT VON FLUIDEN ANGESCHLOSSEN WIRD
METHOD FOR CONNECTING CABLES OF A PIPELINE UNIT SECTION TO BE VERTICALLY JOINED TO A SUBSEA PIPELINE FOR TRANSPORTING FLUIDS

(30) Priorité: 11.02.2015 FR 1551095
(43) Date de publication de la demande: 20.12.2017
(73) Titulaire: SAIPEM S.A., 78180 Montigny Le Bretonneux (FR)
(72) Inventeur: PIONETTI, François-Régis, 50450 La Baleine (FR)
(74) Mandataire: Cabinet Beau de Loménie
(86) Numéro de dépôt international: PCT/FR2016/050255
(87) Numéro de publication internationale: WO 2016/128656

(56) Documents cités:
- WO-A1-01/96706
- WO-A1-03/102455
- US-A1- 2009 159 278
- "Insulation Production pipe Heating wires Outer pipe", , 31 décembre 2014 (2014-12-31), XP055226135, Extrait de l'Internet: URL:http://www.subsea7.com/content/dam/sub sea7/documents/technologyandassets/4_Pg_Le aflet_High-performance__PIP__Reference.pdf [extrait le 2015-11-05]
- Technip: "Electrically trace-heated PIP system advances subsea development - Offshore", , 4 November 2013 (2013-11-04), XP055527702, Retrieved from the Internet: URL:https://www.offshore-mag.com/articles/ print/volume-73/issue-4/pipelines-flowline s/electrically-trace-heated-pip-system-adv ances-subsea-development.html [retrieved on 2018-11-28]

## Description

### Arrière-plan de l'invention

La présente invention se rapporte au domaine général des conduites de transport de fluide, notamment aux conduites sous-marines, reposant au fond de la mer ou assurant la liaison fond-surface pour le transfert d'hydrocarbures, par exemple de pétrole et de gaz, issus de puits de production sous-marins.

Elle concerne tous types de conduites, en particulier les conduites coaxiales de type « Pipe In Pipe » ou PIP, c'est-à-dire « conduite dans une conduite », dans laquelle un tube interne transporte les fluides et un tube externe coaxial au précédent, appelé aussi « enveloppe externe », est en contact avec le milieu ambiant, c'est-à-dire avec l'eau.

Généralement, ces conduites coaxiales sont assemblées à terre en éléments de longueur unitaire (on parle de double, triple ou quadruple joints, ci-après indifféremment dénommées « quad-joints » pour quadruple sections de tube), de l'ordre de 10 à 100m selon la capacité de tenue en charge du système de pose. Ces quad-joints sont alors transportées en mer sur un navire de pose.

Lors de la pose, les quad-joints sont raccordés les uns aux autres à bord du navire et au fur et à mesure de leur pose en mer. La pose peut s'effectuer par l'intermédiaire d'une tour de pose en J positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer.

Cette méthode de pose en J nécessite de déplacer chaque nouveau quad-joint d'une position horizontale (le long du pont du navire de pose) à une position verticale pour s'aligner avec la tour de pose en J. Le quad-joint est maintenu vertical sur la tour de pose pour permettre de souder son extrémité inférieure à l'extrémité supérieure de la conduite. Une fois le quad-joint soudé à la conduite, ce dernier est descendu dans la mer en déplaçant le navire de pose vers l'avant d'une avance correspondant à la longueur du quad-joint.

Par ailleurs, il est connu de positionner des câbles dans l'espace annulaire entre les deux tubes de ces conduites coaxiales sous-marines en les faisant cheminer le long du tube interne sur toute leur longueur. Ces câbles sont notamment des câbles électriques enroulés autour des tubes internes des conduites pour les chauffer par effet Joule. Cette technique, appelée « chauffage tracé » (ou « heat tracing » en anglais), permet de maintenir les fluides transportés dans les conduites sous-marines à une température supérieure à un seuil critique sur tout leur trajet depuis le puits de production jusqu'à l'installation de surface (et éviter ainsi l'apparition de phénomènes gênants dans les conduites pour le maintien de bonnes conditions de circulation).

Or, lors de la pose en J d'un nouveau quad-joint sur la conduite sous-marine, se pose le problème du raccordement entre les câbles de la conduite et ceux du nouveau quad-joint. Compte tenu de la position verticale des tubes lors de cette pose, il est notamment nécessaire d'assurer un raccordement des câbles qui soit simple, rapide et efficace.

WO 03/102455 décrit un dispositif d'étanchéité logé dans l'espace entre les deux enveloppes d'une conduite sous-marine du type PiP. WO 01/96706 décrit un dispositif tendeur/joint utilisé dans les opérations de forage et de production en mer pour des éléments de conduites montantes sous-marines (« riser »). La publication Technip : « Electrically trace-heated PIP system advances subsea development - Offshore » du 4/11/2013 (XP055527702) est relative à un système de chauffage tracé pour des conduites de type PIP.

### Objet et résumé de l'invention

La présente invention a donc pour but principal de proposer un procédé de raccordement simple, rapide et efficace.

Conformément à l'invention, ce but est atteint grâce à un procédé de raccordement de câbles d'une section unitaire de conduite destinée à être assemblée verticalement sur une conduite sous-marine de transport de fluides selon la revendication 1.

Le recours à des connecteurs mâle et femelle sur lesquels sont raccordés les câbles de la section unitaire de conduite et ceux de la conduite permet de réaliser de manière fiable et efficace le raccordement (par exemple électrique) entre ces câbles. Notamment, une fois la section unitaire de conduite raccordée à la conduite, il suffit de faire coulisser verticalement le connecteur femelle (et/ou le connecteur mâle) pour les raccorder et assurer une connexion entre les câbles. La continuité électrique entre les câbles est ainsi établie de façon simple, rapide et efficace, ce qui permet de ne pas augmenter le temps d'utilisation des navires de pose.

On notera également que le connecteur femelle est avantageusement choisi pour être placé en position haute lors de l'assemblage, afin que les douilles destinées à venir se connecter aux broches du connecteur mâle soient orientées vers le bas pour limiter les risques de contamination par des corps étrangers.

Le procédé comprend, après le raccordement des connecteurs mâle et femelle, le pivotement desdits connecteurs raccordés autour d'un axe longitudinal de la section unitaire de conduite. Cette manipulation permet ainsi de parfaitement plaquer les câbles contre une surface extérieure de ladite section unitaire de conduite, de sorte à ne pas nuire à l'efficacité de chauffage de ces câbles.

De préférence, le procédé comprend en outre l'injection de résine à l'intérieur d'une cavité annulaire ménagée entre les connecteurs mâle et femelle lorsqu'ils sont assemblés de sorte à assurer une isolation électrique de la connexion entre lesdits connecteurs (cette opération est typiquement réalisée offshore).

De même, le raccordement des câbles aux connecteurs mâle et femelle comprend avantageusement l'injection de résine à l'intérieur de cavités internes auxdits connecteurs de sorte à assurer une isolation électrique de la connexion des câbles au niveau de leur raccordement auxdits connecteurs (cette opération est typiquement réalisée onshore)

De préférence encore, le procédé comprend en outre le maintien par aimant d'au moins le connecteur femelle sur la section unitaire de conduite pour le fixer verticalement sur la section unitaire de conduite et éviter qu'il ne coulisse verticalement le long de celle-ci sous l'effet de la gravité.

Le raccordement des câbles aux connecteurs mâle et femelle peut comprendre le vissage de fûts sertis sur des extrémités des câbles sur lesdits connecteurs. De plus, les câbles peuvent être raccordés aux connecteurs mâle et femelle en étant régulièrement répartis autour d'un axe longitudinal de la section unitaire de conduite.

L'invention a également pour objet un système comprenant un connecteur mâle et un connecteur femelle pour la mise en œuvre du procédé tel que défini précédemment, le connecteur mâle comprenant un anneau ayant une cavité interne dans laquelle sont logées une pluralité de broches pour le raccordement de câbles et le connecteur femelle comprenant un anneau ayant une cavité interne dans laquelle débouchent des extrémités des câbles à raccorder.

La cavité interne de l'anneau de ces connecteurs débouche de préférence à l'extérieur par au moins une ouverture pour permettre l'injection de résine à l'intérieur de celle-ci. De plus, l'anneau de ces connecteurs comprend avantageusement sur une face interne au moins un aimant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1 à 3 sont des vues d'un connecteur femelle utilisé pour le procédé de raccordement selon l'invention, respectivement en vue éclaté, en perspective et de profil ;
- les figures 4 à 6 sont des vues d'un connecteur mâle utilisé pour le procédé de raccordement selon l'invention, respectivement en vue éclaté, en perspective et de profil ; et
- les figures 7A à 7C sont des vues d'un exemple de mise en œuvre du procédé de raccordement selon l'invention.

### Description détaillée de l'invention

L'invention s'applique à tout type de conduite de transport de fluide, notamment aux conduites coaxiales sous-marines de type « Pipe in Pipe » (ou « PIP »), c'est-à-dire une conduite qui comprend un tube interne destiné à transporter des hydrocarbures issus de puits de production et un tube externe coaxial au précédent, appelé aussi « enveloppe externe », qui est en contact direct avec l'eau environnante.

Ce type de conduite coaxiale sous-marine est typiquement utilisé dans la production offshore d'hydrocarbures par grande profondeur. Dans le cadre de telles installations, les conduites coaxiales sous-marines peuvent être assemblées à terre en plusieurs sections de conduite de longueur unitaire (on parle également de « joints », notamment de « double joints » pour deux éléments unitaires assemblés entre eux, « triple joints » pour trois éléments unitaires assemblés entre eux, « quadruple joints » pour quatre éléments unitaires assemblés entre eux, ou plus génériquement de « quad-joints » pour quadruple sections de tube), de l'ordre de 10 à 100 m selon la capacité de tenue du système de pose. Lors de la pose, ces éléments de longueur unitaire de conduite sous-marine sont raccordés les uns aux autres à bord du navire et au fur et à mesure de leur pose en mer.

Typiquement, le tube interne de ces conduites coaxiales est recouvert de câbles électriques et/ou optiques. Les câbles électriques sont en particulier utilisés pour assurer un chauffage par effet Joule des tubes interne et éviter ainsi la formation de phénomènes gênants à l'intérieur des tubes pouvant entraver la bonne circulation des fluides. Quant aux câbles optiques, ils peuvent notamment être utilisés pour servir à collecter un certain nombre de données sur la température ou les contraintes subies en fonctionnement par la conduite sous-marine.

Le procédé selon l'invention vise à assurer un raccordement entre les câbles (électriques et/ou optiques) d'un nouveau quad-joint (ou section unitaire de conduite) qui doit être assemblé sur la conduite sous-marine avec les câbles (électriques et/ou optiques) de cette dernière ; cet assemblage entre le nouveau quad-joint et la conduite sous-marine s'effectuant verticalement en mer par une tour de pose en J.

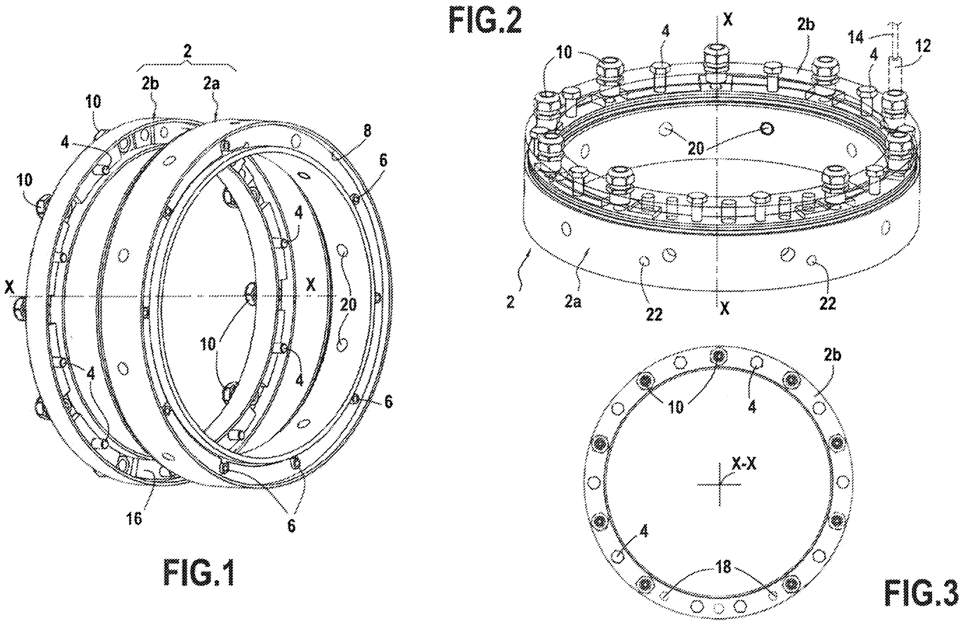

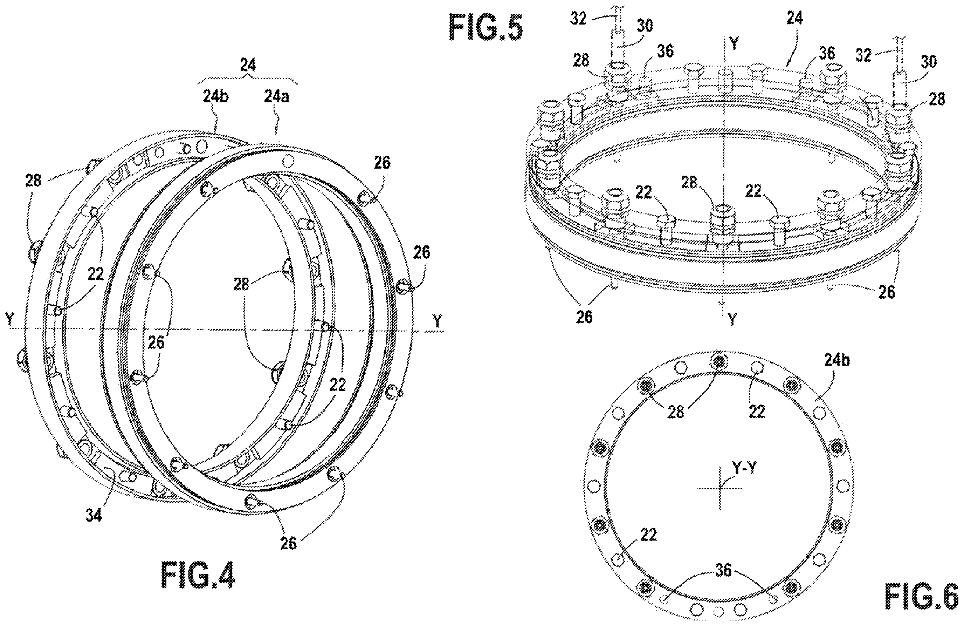

A cet effet, l'invention prévoit de positionner un connecteur femelle (tel que celui décrit ci-après en liaison avec les figures 1 à 3) autour d'une extrémité basse du nouveau quad-joint et un connecteur mâle (tel que celui décrit ci-après en liaison avec les figures 4 à 6) autour d'une extrémité haute de la conduite sous-marine.

Comme représenté sur les figures 1 à 3, le connecteur femelle 2 se présente sous la forme d'un anneau ayant un axe longitudinal X-X et formé de deux parties annulaires 2a, 2b, par exemple réalisées en plastique, assemblées entre elles par des pions 4 régulièrement répartis autour de l'axe X-X.

Au niveau de sa partie 2a, le connecteur femelle comprend une pluralité de douilles 6 régulièrement réparties autour de l'axe X-X et débouchant à l'extérieur du connecteur femelle au niveau d'un renfoncement annulaire 8.

Au niveau de sa partie 2b, le connecteur femelle comprend une pluralité d'écrous de vissage 10 régulièrement réparties autour de l'axe X-X et alignés longitudinalement avec les douilles 6 avec lesquelles ils sont en contact (électrique et/ou optique). Ces écrous de vissage 10 sont destinés à recevoir par vissage des fûts 12 sertis aux extrémités libres des câbles à raccorder 14.

Par ailleurs, comme représenté sur la figure 1, la partie 2b comprend une cavité annulaire interne 16 formée en regard de la partie 2a du connecteur femelle et débouchant à l'extérieur de celui-ci par l'intermédiaire de deux ouvertures 18 (voir la figure 3 : l'une des ouvertures 18 servant à assurer un tirage sous vide de la cavité interne 16 et l'autre à y injecter de la résine).

Le connecteur femelle 2 comprend encore, au niveau de sa face interne, plusieurs aimants 20 pour le fixer verticalement sur la section unitaire de conduite (qui est métallique) et éviter qu'il ne coulisse verticalement le long de celle-ci sous l'effet de la gravité.

Enfin, au niveau de sa face extérieure, le connecteur femelle comprend encore deux perçages 22 débouchant à l'extérieur et s'ouvrant à l'intérieur du renfoncement annulaire 8 au niveau duquel débouchent les douilles 6 (voir la figure 2 : l'un de ces perçages 22 servant à assurer un tirage sous vide et l'autre à l'injection de résine).

Comme représenté sur les figures 4 à 6, le connecteur mâle 24 se présente sous la forme d'un anneau ayant un axe longitudinal Y-Y et formé également de deux parties annulaires 24a, 24b, par exemple réalisées en plastique, assemblées entre elles par des pions 22 régulièrement répartis autour de l'axe Y-Y.

Au niveau de sa partie 24a, le connecteur mâle 24 comprend une pluralité de broches 26 régulièrement réparties autour de l'axe Y-Y et débouchant à l'extérieur du connecteur mâle en faisant saillie longitudinalement vers l'extérieur par rapport à celui-ci (il est à noter que le nombre de broches 26 est bien entendu identique au nombre de douilles 6 du connecteur femelle).

Au niveau de sa partie 24b, le connecteur mâle comprend une pluralité d'écrous de vissage 28 régulièrement réparties autour de l'axe X-X et alignés longitudinalement avec les broches 26 avec lesquelles ils sont en contact (électrique et/ou optique). Ces écrous de vissage 28 sont destinés à recevoir par vissage des fûts 30 sertis aux extrémités libres des câbles à raccorder 32.

Par ailleurs, comme représenté plus précisément sur la figure 4, la partie 24b comprend une cavité annulaire interne 34 formée en regard de la partie 24a du connecteur mâle et débouchant à l'extérieur de celui-ci par l'intermédiaire de deux ouvertures 36 (voir la figure 6 : l'une des ouvertures servant à assurer un tirage sous vide de la cavité interne 34 et l'autre à y injecter de la résine).

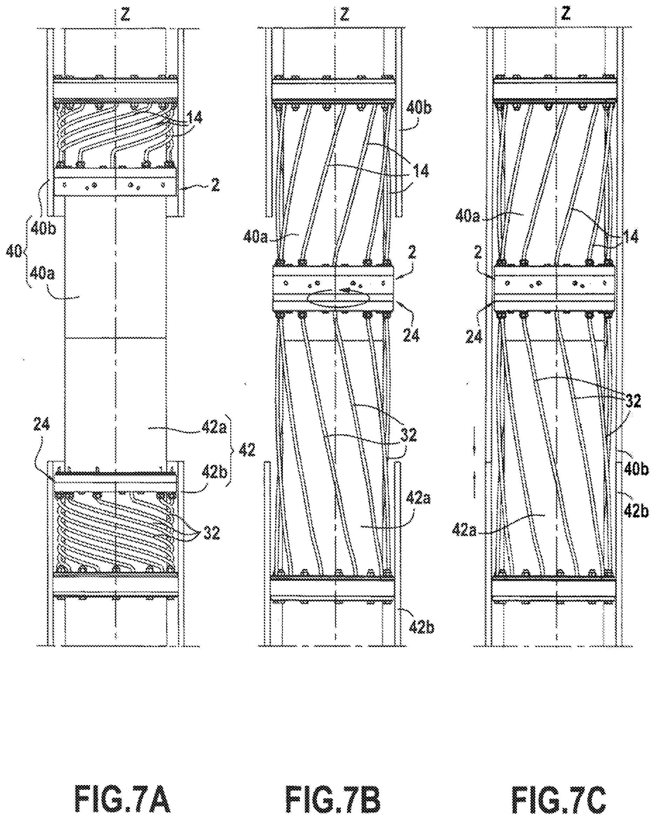

Le procédé de raccordement entre les câbles (électriques et/ou optiques) d'un nouveau quad-joint et les câbles de la conduite sous-marine au moyen des connecteurs femelle 2 et mâle 24 décrits ci-avant est décrit ci-après en liaison avec les figures 7A à 7C.

Préalablement à cette opération, le connecteur femelle 2 est positionné autour d'une extrémité basse du tube interne 40a du nouveau quad-joint 40 à assembler (le maintien du connecteur femelle dans cette position est rendu position grâce aux aimants 20 positionnés sur sa face interne) et les câbles électriques et/ou optiques 14 s'étendant le long du quad-joint 40 sont raccordés à ce connecteur femelle. Dans cette position, les broches du connecteur femelle sont orientées vers le bas.

Comme indiqué précédemment, les fûts 12 sertis aux extrémités libres de ces câbles 14 sont plus précisément vissés sur les écrous de vissage 10 du connecteur femelle. Une fois les câbles 14 raccordés au connecteur femelle, de la résine (typiquement de la résine époxy) est injectée à l'intérieur de la cavité interne du connecteur femelle (par les ouvertures 18) de sorte à assurer une parfaite isolation électrique des câbles au niveau de leur raccordement avec le connecteur femelle (cette opération est réalisée onshore).

De même, le connecteur mâle 24 est positionné autour du tube interne 42a de la conduite 42 sur laquelle doit être assemblé le quad-joint 40 et les câbles électriques et/ou optiques 32 s'étendant le long de la conduite sont raccordés à ce connecteur mâle. Dans cette position, les broches du connecteur mâle sont orientées vers le haut.

A cet effet, les fûts 30 sertis aux extrémités libres de ces câbles 32 sont plus précisément vissés sur les écrous de vissage 28 du connecteur mâle et de la résine (typiquement de la résine époxy) est également injectée à l'intérieur de la cavité interne du connecteur (par les ouvertures 36) de sorte à assurer une parfaite isolation électrique des câbles au niveau de leur raccordement avec le connecteur mâle (cette opération est réalisée onshore).

Comme représenté sur la figure 7A, le nouveau quad-joint 40 à assembler est alors positionné verticalement au-dessus de la conduite sous-marine 42 au moyen d'une tour en J (non représentée). Plus précisément, les tubes internes respectifs 40a, 42a du quad-joint 40 et de la conduite sous-marine 42 sont assemblés l'un sur l'autre (par soudage), les tubes externes respectifs 40b, 42b ayant été préalablement coulissés verticalement pour permettre d'effectuer cette opération.

Une fois les tubes internes respectifs 40a, 42a du quad-joint 40 et de la conduite 42 assemblés entre eux, les connecteurs femelle 2 et/ou mâle 24 sont coulissés verticalement le long du quad-joint et de la conduite pour permettre leur raccordement (c'est-à-dire la connexion électrique et/ou optique entre les broches du connecteur mâle et les douilles du connecteur femelle) - voir la figure 7B. Le coulissement du connecteur femelle doit être rendu possible malgré la présence des aimants sur sa face interne moyennant une force suffisante.

Dans cette position, de la résine (typiquement de la résine époxy) est injectée dans la cavité annulaire interne formée entre le renfoncement annulaire 8 du connecteur femelle 2 et la partie 24a du connecteur mâle 24 munie des broches 26 par l'intermédiaire des perçages 22 (cette opération est réalisée offshore). Cette résine permet d'assurer, d'une part une parfaite isolation électrique entre les douilles du connecteur femelle et les broches du connecteur mâle, et d'autre part une fixation secondaire des connecteurs entre eux.

Si nécessaire, les connecteurs femelle 2 et mâle 24 ainsi raccordés sont alors avantageusement pivotés autour d'un axe longitudinal Z-Z du quad-joint 40 de sorte à parfaitement plaquer les câbles 14 contre une surface extérieure du quad-joint et les câbles 32 contre une surface extérieure de la conduite 42. Enfin, une fois raccordés les connecteurs femelle 2 et mâle 24, les tubes externes respectifs 40b, 42b du quad-joint 40 et de la conduite sous-marine 42 sont coulissés verticalement l'un vers l'autre pour permettre leur raccordement (figure 7C).

On notera que les connecteurs femelle et mâle ainsi raccordés sont de préférence décalés longitudinalement par rapport à la soudure entre les tubes externes respectifs du quad-joint et de la conduite. En effet, le flamboiement de la soudure pourrait abîmer les connecteurs.

On notera également que les connecteurs mâle et femelle et le procédé de raccordement selon l'invention ont été décrits ici en liaison avec une conduite coaxiale de type PIP. Bien entendu, la présente invention s'applique également à toute autre conduite de transport de fluide, notamment à des conduites simples recouvertes de matériaux composites.

## Revendications

1. Procédé de raccordement de câbles électriques et/ou optiques d'une section unitaire de conduite destinée à être assemblée verticalement sur une conduite sous-marine de transport de fluides, comprenant :
le positionnement autour d'une extrémité basse de la section unitaire de conduite (40) d'un connecteur annulaire femelle (2) comprenant un anneau ayant une cavité interne (16) dans laquelle débouchent des extrémités des câbles électriques et/ou optiques (14) à raccorder, lesdits câbles s'étendant le long de ladite section unitaire de conduite ;
le positionnement autour d'une extrémité haute de la conduite (42) d'un connecteur annulaire mâle (24) comprenant un anneau ayant une cavité interne (34) dans laquelle sont logées une pluralité de broches pour le raccordement des câbles électriques et/ou optiques (32) s'étendant le long de ladite conduite ;
le raccordement des connecteurs mâle et femelle en les faisant coulisser verticalement l'un vers l'autre lors de l'assemblage de la section unitaire de conduite sur la conduite ; et
le pivotement desdits connecteurs raccordés autour d'un axe longitudinal (Z-Z) de la section unitaire de conduite de sorte à plaquer les câbles (14) contre une surface extérieure de ladite section unitaire de conduite.

2. Procédé selon la revendication 1, comprenant en outre l'injection de résine à l'intérieur d'une cavité annulaire ménagée entre les connecteurs mâle et femelle lorsqu'ils sont assemblés de sorte à assurer une isolation électrique de la connexion entre lesdits connecteurs.

3. Procédé selon l'une des revendications 1 et 2, dans lequel le raccordement des câbles aux connecteurs mâle et femelle comprend l'injection de résine à l'intérieur de cavités internes (16, 34) auxdits connecteurs de sorte à assurer une isolation électrique de la connexion des câbles au niveau de leur raccordement auxdits connecteurs.

4. Procédé selon l'une quelconque des revendications 1 à 3, comprenant en outre le maintien par aimant (20) d'au moins le connecteur femelle (2) sur la section unitaire de conduite pour éviter qu'il ne coulisse verticalement le long de celle-ci sous l'effet de la gravité.

5. Procédé selon l'une quelconque des revendications 1 à 4, dans lequel le raccordement des câbles aux connecteurs mâle et femelle comprend le vissage de fûts (12, 30) sertis sur des extrémités des câbles sur lesdits connecteurs.

6. Procédé selon l'une quelconque des revendications 1 à 5, dans lequel les câbles (14, 32) sont raccordés aux connecteurs mâle et femelle en étant régulièrement répartis autour d'un axe longitudinal de la section unitaire de conduite.

7. Système comprenant un connecteur mâle (24) et un connecteur femelle (2) pour la mise en œuvre du procédé selon l'une quelconque des revendications 1 à 6, dans lequel la cavité interne (34) de l'anneau du connecteur mâle débouche à l'extérieur par au moins une ouverture (36) pour permettre l'injection de résine à l'intérieur de celle-ci et la cavité interne (16) de l'anneau du connecteur femelle débouche à l'extérieur par au moins une ouverture (18) pour permettre l'injection de résine à l'intérieur de celle-ci.

8. Système selon la revendication 7, dans lequel l'anneau du connecteur femelle comprend sur une face interne au moins un aimant (20).

## Patentansprüche

1. Verfahren zur Verbindung von elektrischen und/oder optischen Kabeln eines Einheits-Leitungsabschnitts, der dazu bestimmt ist, vertikal in einer unterseeischen Leitung für den Transport von Fluiden eingebaut zu werden, umfassend:
die Positionierung einer ringförmigen Verbindungsbuchse (2), umfassend einen Ring, der einen inneren Hohlraum (16) aufweist, in welchen die Enden der zu verbindenden elektrischen und/oder optischen Kabel (14) münden, wobei sich die Kabel entlang des Einheits-Leitungsabschnitts erstrecken, um ein unteres Ende des Einheits-Leitungsabschnitts (40) herum,
die Positionierung eines Verbindungssteckers (24), umfassend einen Ring, der einen inneren Hohlraum (34) aufweist, in welchem mehrere Kontaktstifte für die Verbindung der elektrischen und/oder optischen Kabel (32), die sich entlang der Leitung erstrecken, untergebracht sind, um ein oberes Ende der Leitung (42) herum,
die Verbindung des Verbindungssteckers und der Verbindungsbuchse, indem diese während des Einbaus des Einheits-Leitungsabschnitts in die Leitung vertikal zueinander hingeschoben werden, und
das Verdrehen der verbundenen Verbinderteile um eine Längsachse (Z-Z) des Einheits-Leitungsabschnitts auf solche Weise, dass die Kabel (14) gegen eine äußere Oberfläche des Einheits-Leitungsabschnitts gedrückt werden.

2. Verfahren nach Anspruch 1, ferner umfassend die Einspritzung von Harz in das Innere eines ringförmigen Hohlraums, der zwischen dem Verbindungsstecker und der Verbindungsbuchse angeordnet wird, wenn diese eingebaut werden, auf solche Weise, dass eine elektrische Isolierung der Verbindung zwischen den Verbindern sichergestellt wird.

3. Verfahren nach einem der Ansprüche 1 und 2, wobei die Verbindung der Kabel mit dem Verbindungsstecker und der Verbindungsbuchse die Einspritzung von Harz in das Innere von inneren Hohlräumen (16, 34) in die Verbinder umfasst, auf solche Weise, dass eine elektrische Isolierung der Verbindung der Kabel im Bereich ihrer Verbindung mit den Verbindern sichergestellt wird.

4. Verfahren nach einem der Ansprüche 1 bis 3, umfassend ferner das magnetische Halten (20) zumindest der Verbindungsbuchse (2) an dem Einheits-Leitungsabschnitt, um zu verhindern, dass sie unter der Wirkung der Schwerkraft vertikal entlang desselben gleitet.

5. Verfahren nach einem der Ansprüche 1 bis 4, wobei die Verbindung der Kabel mit dem Verbindungsstecker und der Verbindungsbuchse die Verschraubung von Trommelschrauben (12, 30) auf den Enden der Kabel auf den Verbindern umfasst.

6. Verfahren nach einem der Ansprüche 1 bis 5, wobei die Kabel (14, 32) mit dem Verbindungsstecker und der Verbindungsbuchse verbunden werden, indem sie regelmäßig um eine Längsachse des Einheits-Leitungsabschnitts herum verteilt werden.

7. System, das einen Verbindungsstecker (24) und eine Verbindungsbuchse (2) für die Durchführung des Verfahrens nach einem der Ansprüche 1 bis 6 umfasst, wobei der innere Hohlraum (34) des Rings des Verbindungssteckers sich nach außen durch zumindest eine Öffnung (36) öffnet, um die Einspritzung von Harz in das Innere desselben zu erlauben, und der innere Hohlraum (16) des Rings der Verbindungsbuchse sich nach außen durch zumindest eine Öffnung (18) öffnet, um die Einspritzung von Harz in das Innere desselben zu erlauben.

8. System nach Anspruch 7, wobei der Ring der Verbindungsbuchse auf einer inneren Seite zumindest einen Magnet (20) umfasst.

## Claims

1. A method of connecting electrical and/or optical cables of a unitary pipe section that is to be assembled vertically to an undersea fluid transport pipe, the method comprising:
positioning around a low end of the unitary pipe section (40) a female annular connector (2) comprising a ring having an internal cavity (16) into which the ends of the electrical and/or optical cables for connection lead, said cables (14) extending along said unitary pipe section;
positioning around a high end of the pipe (42) a male annular connector (24) comprising a ring having an internal cavity (34) in which a plurality of pins are received for connecting electrical and/or optical cables (32) extending along said pipe;
connecting together the male and female connectors by sliding them vertically towards each other while assembling the unitary pipe section on the pipe; and
pivoting said connected-together connectors around a longitudinal axis (Z-Z) of the unitary pipe section in order to press the cables (14) against an outside surface of said unitary pipe section.

2. A method according to claim 1, further including injecting resin into the inside of an annular cavity formed between the male and female connectors when they are assembled together so as to provide electrical insulation for the connection between said connectors.

3. A method according to one of claims 1 and 2, wherein the cables are connected to the male and female connectors by injecting resin into the insides of internal cavities (16, 34) of said connectors so as to provide electrical insulation of the connection of the cables where they are connected to said connectors.

4. A method according to any one of claims 1 to 3, further including holding at least the female connector (2) on the unitary pipe section by means of a magnet (20) so as to prevent it from sliding vertically along the pipe section under the effect of gravity.

5. A method according to any one of claims 1 to 4, wherein the cables are connected to the male and female connectors by screwing shanks (12, 30) that are crimped to the ends of the cables to said connectors.

6. A method according to any one of claims 1 to 5, wherein the cables (14, 32) are connected to the male and female connectors while being regularly spaced around a longitudinal axis of the unitary pipe section.

7. A system comprising a male connector (24) and a female connector (2) for performing the method according to any one of claims 1 to 6, wherein the internal cavity (34) of the ring of the male connector opens out to the outside via at least one opening (36) in order to enable resin to be injected into its inside and the internal cavity (16) of the ring of the female connector opens to the outside via at least one opening (18) in order to enable resin to be injected into its inside.

8. A system according to claim 7, wherein the ring of the female connector has at least one magnet (20) on an inside face.
